(19) Europäisches Patentamt
European Patent Office
Office européen des brevets

(11) Publication number: **0 322 557**
**A1**

(12) # EUROPEAN PATENT APPLICATION

(21) Application number: **88119308.0**

(51) Int. Cl.4: **C08J 7/06**

(22) Date of filing: **21.11.88**

(30) Priority: **31.12.87 US 140085**

(43) Date of publication of application: **05.07.89 Bulletin 89/27**

(84) Designated Contracting States: **DE FR GB IT NL**

(71) Applicant: **GENERAL ELECTRIC COMPANY**
**1 River Road**
**Schenectady New York 12305(US)**

(72) Inventor: **Allbright, John Gordon**
**1604 Country Club Road Apartment A**
**Mount Vernon Indiana 47620(US)**
Inventor: **Van Dam, Bert**
**Zimmermanhof 1**
**NL-6952 Dieren(NL)**

(74) Representative: **Catherine, Alain**
**General Electric France Service de Propriété**
**Industrielle 18 Rue Horace Vernet B.P. 76**
**F-92134 Issy-les-Moulineaux Cédex(FR)**

(54) **Improved process and composition for surface impregnation of thermoplastic polymers with UV-absorbing compounds.**

(57) The invention is directed to a novel UV-absorber solution for surface impregnation of a thermoplastic article which comprises a surface impregnation effective amount of an ultraviolet radiation absorbing aromatic organic compound dissolved in a solvent which contains from about 20% to about 50% by wt. propanediol, from about 20% to about 40% by wt. 2-butoxy ethanol and from about 20% to about 40% by wt. 4-hydroxy-methylpentanone. In another aspect, the invention resides in a process of producing an ultraviolet radiation stabilized thermoplastic article which comprises impregnating the surface layers of the thermoplastic article with an ultraviolet radiation absorber by contacting the article, which has been preheated to a surface impregnation effective elevated temperature, with a solution which contains an ultraviolet radiation-absorbing which contains an ultraviolet radiation-absorbing aromatic organic compound and a solvent which contains from about 20% to about 50% by wt. propanediol, from about 20% to about 45% by wt. 2-butoxyethanol, and from about 20% to about 40% by wt. 4-hydroxy-4-methylpentanone.

EP 0 322 557 A1

# IMPROVED PROCESS AND COMPOSITION FOR SURFACE IMPREGNATION OF THERMOPLASTIC POLYMERS WITH UV-ABSORBING COMPOUNDS

This invention relates to a process for producing thermoplastic articles exhibiting superior resistance to ultraviolet radiation.

## Background of the Invention

Most organic polymeric materials undergo some degradation when exposed to the high energy photons of ultraviolet radiation. The degradation manifests itself, depending on the polymeric material, in yellowing, discoloration, embrittlement and other loss of physical properties. Polycarbonate is one example of a polymer which is sensitive to ultraviolet degradation.

Ultraviolet radiation absorbers have been used with various resins such as polycarbonates, acrylics, polyesters, polyolefins, vinyls, and polystyrene to provide protection against attack by ultraviolet radiation. The ultraviolet radiation absorber generally has a very high UV absorptivity relative to that of the polymer and functions be screening out the damaging ultraviolet portion of light.

To qualify as a successful ultraviolet light absorber for a polymer, particularly for polycarbonate, the absorber should fulfill several requirements. The absorber advantageously has a high specific absorptivity in the range of wavelengths that are most deleterious to the polymer and that are present in the source of the exposure. The absorber should also be compatible with the polymer and not substantially deleteriously affect its physical properties at concentrations required to give good UV absorption. For most applications, the absorber preferably does not significantly absorb light in the visible region of the spectrum, or a color will be imparted to the polymer.

Several methods are known which utilize ultraviolet radiation absorbers to stabilize various polymers against ultraviolet radiation. These methods include blending the ultraviolet radiation absorbers with the polymer prior to processing; incorporating the absorbers in surface laminating or coating materials which are applied onto the surface of the processed polymer; and impregnating the absorbers in the polymer surface. Conventional surface impregnation techniques include (i) using aggressive solvents to swell or soften the polymer surface, thereby allowing the absorber to diffuse into the softened surface of the polymer; (ii) melting the absorber and polymer surface in order to diffuse the molten absorber into the molten polymer surface; or (iii) partitioning of the absorber between a polymeric surface and a relatively poor solvent for the absorber held at high temperatures, such that the absorber, which is more soluble in the polymer than in the solvent, diffuses into the polymer surface.

While each of these methods can be utilized to impart improved ultraviolet stability to the polymeric product, each of them has certain disadvantages. Blending the absorber with the bulk polymer results in the absorber being distributed throughout the entire polymer. This procedure is both uneconomical, as these absorbers are usually quite expensive, and not completely successful. Since most of the absorber resides in the interior of the polymer, instead of at the surface where it is most needed, much of the harmful ultraviolet radiation penetrates and deteriorates the surface of the polymer structure before reaching the majority of the absorber distributed within the polymer. Furthermore, since the concentration of the absorber in the resin is limited by degree of compatibility of the absorber with the polymer, using sufficiently high concentrations of absorber to provide surface protection tends to adversely affect the physical properties of the polymer.

Incorporating the absorbers in surface-laminating or coating materials can be difficult and expensive, because of the extra processing step is required. Furthermore, difficulties are sometimes encountered in adhering the coating or laminating material to the surface of the polymer, or in maintaining continued adequate adhesion, especially after exposure to weathering or thermoforming procedures. Even when the coating or laminating material adheres well, it often cannot be applied without forming unsightly streaks on the polymer surface. An additional drawback to this method is that the physical properties of the polymer, such as impact strength, are sometimes affected adversely by these coating or laminating materials.

In principle, surface impregnation techniques are preferred, because the ultraviolet radiation absorbers are contained only in the surface regions of the polymer where they are needed. In practice, however, prior art surface impregnation techniques also suffer from certain disadvantages. Melting the polymer and the absorbers to diffuse the absorbers into the polymer surface suffers from the disadvantage that the polymer or at least its surface region, must be heated to the melting point. Such heating may result in the formation

of an uneven or wrinkled polymer surface upon cooling and solidification. Furthermore, the physical properties of the polymer may sometimes be deleteriously affected by this melting of the polymer. In the aggressive solvent technique, an ultraviolet radiation-absorbing compound is dissolved in a solvent which is aggressive towards the polymer. Typical aggressive solvents for polycarbonates include chlorinated hydrocarbons, esters, or aromatic hydrocarbons. When these solutions are applied onto the surface of a polycarbonate article the aggressive solvent functions as a softening or swelling agent for the polymer surface, allowing the absorber to diffuse into the softened or swelled polymer surface regions. However, the aggressive nature of these solvents can cause surface imperfections, and prolonged contact between the polymer and the aggressive solvent can lead to etching, hazing and crazing of the polymer. Using ultraviolet radiation-stabilizing solutions which contain an ultraviolet radiation-absorbing compound that is more soluble in the polymer than in the stabilizing solution rather sharply limits the number and type of ultraviolet radiation-absorbing compounds which may be used.

One method of impregnating the surface of a polymeric material is described in U.S. Patent No. 4,322,455 to Olson. The Olson patent discloses a process for producing an ultraviolet radiation-stabilized polymeric, particularly polycarbonate, article comprising impregnating the surface layers of the article by first applying onto the surface of the article an ultraviolet radiation-stabilizing composition which contains an ultraviolet radiation absorber and a nonagressive liquid carrier. The coated article is then heated to a temperature sufficient for the absorber to diffuse into the surface layers of the article but insufficient to deleteriously affect the properties of the polymer.

A disadvantage of the process described in Olson and other prior art processes is that additional heating is required after the UV radiation-absorbing compound is applied to the surface of the thermoplastic. Also, prior art UV absorber-containing solutions could not be used on hot (up to 130° C) thermoplastic sheets.

A need remains for an efficient and economical surface impregnation procedure for making UV-stabilized thermoplastic articles.

## Brief Description of the Drawings

Figure 1 is a photomicrograph of the surface of a polycarbonate film which has been treated with a 6% solution of a UV absorber in 1-methoxy-2-propanol at 52° C.

Figure 2 is a photomicrograph of the surface of a polycarbonate film which has been treated with a 6% solution of a UV absorber in 1-methoxy-2-propanol at 132° C.

Figure 3 is a photomicrograph of the surface of a polycarbonate film which has been treated with the composition of the present invention at room temperature.

Figure 4a is a photomicrograph of an untreated polycarbonate film with scratches.

Figure 4b is a photomicrograph of the same film shown in Figure 4a after treatment according to the process of the present invention.

## Summary of the Disclosure

In accordance with the present invention, a novel UV-absorber solution for the surface impregnation of a thermoplastic article comprises a surface impregnation effective amount of an ultraviolet radiation absorbing aromatic organic compound dissolved in a solvent which contains from about 20% to about 50% by wt. propanediol, from about 20% to about 40% by wt. 2-butoxy ethanol and from about 20% to about 40% by wt. 4-hydroxy-methylpentanone. In another aspect, the invention resides in a process of producing an ultraviolet radiation stabilized thermoplastic article which comprises impregnating the surface layers of the thermoplastic article with an ultraviolet radiation absorber by contacting the article, which has been preheated to a surface impregnation effective elevated temperature, with a solution which contains an ultraviolet radiation-absorbing aromatic organic compound and a solvent which contains from about 20% to about 50% by wt. propanediol, from about 20% to about 45% by wt. 2-butoxyethanol, and from about 20% to about 40% by wt. 4-hydroxy-4-methylpentanone.

The present invention employs a UV-absorbing compound-solvent combination which makes spray impregnation of hot (e.g., up to about 130° C) thermoplastic sheets possible. The process of the present invention can be used to impregnate thermoplastic sheets on extrusion lines without the need for additional

heat sources. Also, the present process provides a highgloss appearance to the thermoplastic, produces a high UV absorbance, and visually reduces or eliminates minor surface imperfections, such as scratches.

In a preferred embodiment, the process of this invention is used to make an ultraviolet radiation resistant polycarbonate article. The polycarbonate article may be formed in a conventional manner, for example by injection molding, extrusion, cold forming, vacuum forming, blow molding, compression molding, transfer molding, and the like. The article may be in any shape and need not be a finished article of commerce, that is, it may be sheet material or film which would becut or sized or mechanically shaped into a finished article.

## Detailed Description of the Invention

The unique solvent system employed in the composition and process of this invention is particularly suited to the surface impregnation of thermoplastic articles. This solvent system combines advantageous solvent properties and the proper degree of aggressiveness toward the thermoplastics. It is important that the ultraviolet radiation-absorbing compound can be dissolved in the solvent system in an amount sufficient to impart a high degree of UV absorptivity of the impregnated thermoplastic. The solvent system used in the present compositions have good solvent properties for conventional UV-absorbing compounds. The solvent system is aggressive enough toward thermoplastics that it effects a relatively high level of surface impregnation of the UV-absorbing compound in the thermoplastic, yet it is not so aggressive that it deleteriously affects the polymer. The compositions of this invention can be used for surface impregnation at relatively low temperatures. Indeed, since the UV-absorbing compound is adequately soluble in the solvent system at room temperature, the compositions need not be heated prior to application to the thermoplastic. To the extent that an elevated impregnation temperature is desired, only the thermoplastic article being treated need be heated.

The solvent properties of the present compositions and their aggressiveness toward thermoplastics can be optimized for a particular application by adjusting the relative proportions of the components. Propanediol is a non-aggressive solvent, which acts as a carrier and a wetting agent. Improper wetting of the polymer surface can result in the formation of dewets (minute imperfections). 2-Butoxyethanol is also a relatively non-aggressive solvent and contributes to the outstanding optical properties (clarity and absence of surface imperfections) of the UV stabilized article. 4-Hydroxy-4-methylpentanone contributes to the solvent properties and aggressiveness of the composition. Thus, by altering the relative proportions of these components, the solvent system can be optimized for the particular UV absorber, thermoplastic and processing conditions.

In general, the solvent system contains from about 20% to about 50% by weight of propanediol, from about 20% to about 45% by weight of 2-butoxyethanol and from about 20% to about 40% by weight of 4-hydroxy-4-methylpentanone. A preferred solvent system, especially for the surface impregnation of polycarbonates, contains from about 25% to about 45% byweight propanediol, from about 20% to about 30% by weight 2-butoxyethanol and from about 25% to about 45% by weight 4-hydroxy-4-methylpentanone.

The stabilizing composition contains a surface impregnation effective amount of the ultraviolet radiation-absorbing compound. By surface impregnation effective amount is meant an amount of UV absorber effective to stabilize the thermoplastic article against degradation by ultraviolet radiation after the article has been treated with the stabilizing composition. The stabilizing composition typically contains from about 0.01 to about 15 weight percent of the ultraviolet radiation absorber, preferably from about 0.1 to about 10 weight percent of the ultraviolet radiation absorber, and more preferably from about 3 to about 6 weight percent of the absorber. It will be appreciated the concentration of the UV absorber will depend upon a number of factors, including the level of UV absorbance desired, the extinction coefficient of the particular UV absorber used, the receptivity of the thermoplastic to the UV absorber, and the like. The stabilizing composition maycontain only one ultraviolet radiation-absorbing compound or a combination of two or more ultraviolet radiation- absorbing compounds. If two or more ultraviolet radiation absorbing compounds are present in the stabilizing composition their combined weight percentages advantageously fall within the aforementioned ranges.

The ultraviolet radiation absorbers employed in the compositions and process of this invention can be any of the known ultraviolet radiation-absorbing aromatic organic compounds which have high extinction coefficients and are compatible with the thermoplastic article being treated. These compounds include benzophenone and benzophenone derivatives, benzoate esters, phenyl salicylates, derivatives of crotonic acid, malonic acid esters, and cyanoacrylates.

Included among the ultraviolet radiation absorbers which fall into the categories of benzophenone derivatives and benzotriazole derivatives are those compounds disclosed in U.S. Pat. Nos. 3,309,220; 3,049,443 and U.S. Pat. No. Re. 2,976 all of which are incorporated herein by reference. Some non-limiting examples of these compounds include:
2,2′-dihydroxybenzophenone;
2,2′-4,4′-tetrahydoxybenzophenone;
2,2′-dihydroxy-4,4′-dimethoxybenzophenone;
2,2′-dihydroxy-4,4′-diethoxybenzophenone;
2,2′-dihydroxy-4,4′-dipropoxybenzophenone;
2,2′-dihydroxy-4-methoxy-4′-ethoxybenzophenone;
2,2′-dihydroxy-4-methoxy-4′-propoxybenzophenone;
2,2′-dihydroxy-4-methoxy-4′-butoxybenzonphenone;
2,2′-dihydroxy-4-ethoxy-4′-propoxybenzophenone;
2,2′-dihydroxy-4-ethoxy-4′-butoxybenzophenone;
2,3′-dihydroxy-4-4′-dimethoxybenzophenone;
2,3′-dihydroxy-4-methoxy-4′-butoxybenzophenone;
2-hydroxy-4,4′,5′-trimethoxybenzophenone;
2-hydroxy-4,4′,6′-tributoxybenzophenone;
2-hydroxy-4-butoxy-4′,5′-diemthoxybezophenone;
2-hydroxy-4-ethoxy-2′,4′-dibutylbenzophenone;
2-hydroxy-4-propoxy-4′,6′-dichlorobenzophenone;
2-hydroxy-4-propoxy-4′,6′-dibromobenzophenone;
2,4-dihyroxybenzophenone;
2-hydroxy-4-methoxybenophenone;
2-hydroxy-4-ethoxybenzophenone;
2-hydroxy-4-propoxybenzophenone;
2-hydroxy-4-butoxybenzophenone;
2-hydroxy-4-octyloxybenzophenone;
2-hydroxy-4-methoxy-4′-methylbenzophenone;
2-hydroxy-4-methoxy-4′-ethylbenzophenone;
2-hydroxy-4-methoxy-4′-propylbenzophenone;
2-hydroxy-4-methoxy-4′-butylbenzophenone;
2-hydroxy-4-methoxy-4′-tert-butylbenzophenone;
2-hydroxy-4-methoxy-4′-chlorobenzophenone;
2-hydroxy-4-methoxy-2′-chlorobenzophenone;
2-hydroxy-4-methoxy-4′-bromobenzophenone;
2-hydroxy-4,4′-dimethoxybenzophenone;
2-hydroxy-4,4′-dimethoxy-3-methylbenzophenone;
2-hydroxy-4,4′-dimethoxy-2′-ethylbenzophenone;
2-hydroxy-4,4′,5′-trimethoxybenzophenone;
2-hydroxy-4-ethoxy-4′-methylbenzophenone;
2-hydroxy-4-ethoxy-4′-ethylbenzophenone;
2-hydroxy-4-ethoxy-4′-propylbenzophenone;
2-hydroxy-4-ethoxy-4′-butylbenzophenone;
2-hydroxy-4-ethoxy-4′-methoxybenzophenone;
2-hydroxy-4,4′-diethoxybenzophenone;
2-hydroxy-4-ethoxy-4′-propoxybenzophenone;
2-hydroxy-4-ethoxy-4′-butoxybenzophenone;
2-hydroxy-4-ethoxy-4′-chlorobenzophenone;
2-hydroxy-4-ethoxy-4′-bromobenzophenone;
2-(2′-hydroxy-5′-methylphenyl)-benzotriazole;
2-(2′-hydroxy-5′-tert-butylphenyl)-benzotriazole;
2-(2′-hydroxy-5′-tert-butylphenyl)-benzotriazole;
2-(2′-hydroxy-3′-methyl-5′-tert-butylphenyl)-benzotriazole;
2-(2′-hydroxy-5′-cyclohexylphenyl)-benzotriazole;
2-(2′-hydroxy-3′,5′-dimethylphenyl)-benzotriazole;
2-(2′-hydroxy-5′-tert-butylphenyl)-5-chlorobenzotriazole;
and 2-(2′-hydroxy-3′-di-tert-butylphenyl)-benzotriazole.

Derivatives of crotonic acid which may be used as ultraviolet radiation absorbers include: alpha-cyano-beta-(p-methoxyphenyl)-crotonic acid methyl ester and alpha-cyano-beta-N-(2-methyl-indolinyl)-crotonic acid methyl ester. The benzoate ester ultraviolet radiation- absorbing compounds include the $C_8$-$C_{20}$ alkyl and aryl benzoates, alkyl and aryl hydroxybenzoates, alkaryl and aralkyl benzoates, and alkaryl and aralkyl hydroxybenzoates.

Malonic acid esters which may be used as ultraviolet radiation-absorbing compounds include the benzylidene malonates. These benzylidene malonates are represented by the general formula

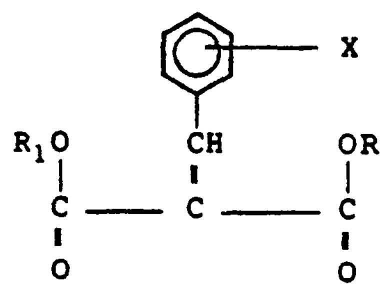

wherein X is selected from hydrogen, hydroxyl, halogen, alkyl, preferably $C_1$-$C_{10}$ alkoxy, radicals; and R and $R_1$ are independently selected from alkyl radical, preferably alkyl radicals containing from 1 to about 10 carbon atoms, substituted alkyl radicals, preferably those containing from about 1 to about 10 carbon atoms and hydroxyl or halogen substituents, aryl radicals, preferably the phenyl radical, alkaryl radicals, preferably those alkaryl radicals containing from 7 to about 12 carbon atoms, aralkyl radicals, preferably aralkyl radicals containing from 7 to about 12 carbon atoms, and substituted aryl radicals, preferably phenyl radicals containing hydroxyl or halogen substituents. Preferred benzylidene malonates represented by formula III are those wherein X represents an alkoxy group and R and $R_1$ are independently selected from alkyl radicals. Examples of these benzylidene malonates include diethyl paramethoxybenzylidene malonate and dimethyl paramethoxybenzylidene malonate.

Among the cyano-acrylates which are useful ultraviolet radiation absorbers are those represented by the general formula

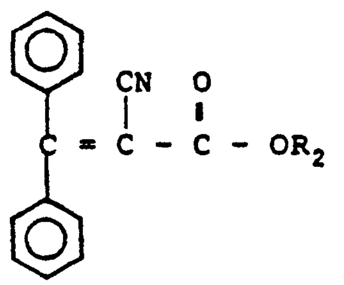

II

wherein $R_2$ is alkyl or hydroxyalkyl. These compounds of formula II are disclosed in U.S. Pat. No. 4,129,667 which is incorporated by reference.

The preferred ultraviolet radiation-absorbing compounds, for the purposes of the present invention, are those benzophenones and benzophenone derivatives, benzotriazoles, benzotriazole derivatives, the benzylidene malonates, and the cyano-acrylates.

A particularly preferred radiation absorbing compound is represented by the formula

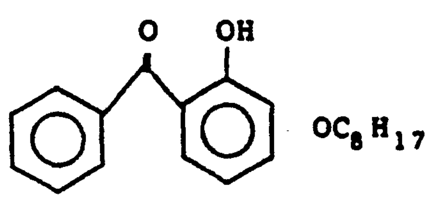

III

This compound is commercially available from American Cyanamid Corp. under the trademark Cyabsorb® UV-531.

In a particular embodiment, this invention relates to a process of producing an ultraviolet radiation stabilized thermoplastic article. The process comprises impregnating the surface layers of a thermoplastic article with an ultraviolet radiation absorber by contacting the article, which has been preheated to a surface impregnation effective elevated temperature, with the composition described above. The surface impregnation effective elevated temperature is a temperature at which sufficient impregnation of the surface of the thermoplastic article occurs to impart a high level of UV absorptivity. In general, an absorbance greater than 2.0, preferable greater than about 2.5 is desired. One advantage of the present invention is that the impregnation temperature is relatively low. Unlike some prior art impregnation procedures, the surface of the thermoplastic need not be melted or softened to achieve effective impregnation. In general, the impregnation temperature ranges from about 40° C to about 200° C, preferably from about 100° C to about 150° C. These temperatures are advantageously achieved in a plant by contacting the thermoplastic sheet with the impregnation solution immediately after the sheet exits an extrusion operation. Thus the impregnation procedure can conveniently be part of a normal sheet-manufacturing operation.

The impregnation solution may be applied to the thermoplastic article in any convenient manner. For example, the article may be dipped in the solution, so as to effect impregnation of both sides of the article. A preferred procedure, especially in sheet-manufacturing operations, is to spray the article with the impregnation solution. Other application techniques will occur to those skilled in the art.

After the impregnation solution has been applied to the thermoplastic article, they are allowed to remain in contact for a time sufficient to achieve the desired degree of surface impregnation. Such time will vary, depending upon the particular thermoplastic, UV absorber, impregnation temperture and solvent system employed. Generally, only a few minutes are required to achieve a high level of UV absorptivity. In a commercial operation, the solvent evaporates from the thermoplastic surface, leaving the relatively non-volatile UV absorber impregnated in the surface.

The present invention is especially well-suited for the production of UV stabilized polycarbonate articles. Such polycarbonates are well-known thermoplastics which have recurring units of the formula

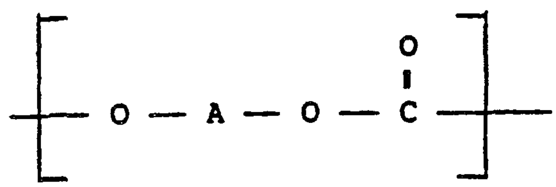

IV where A is a divalent aromatic residue of the dihydric phenol employed in the polymer producing reaction. These polycarbonates resins are high molecular weight aromatic polymers which may be prepared by reacting a dihydric phenol with a carbonate pre-cursor such as phosgene, a haloformate or a carbonate ester.

The aromatic carbonate polymers of this invention may be prepared by methods well known in the art and described in U.S. Pat. Nos. 3,161,615; 3,220,973; 3,312,659; 3,312,660; 3,313,776; 3,666,614; and 3,989,672 all of which are incorporated herein by reference.

Also included herein are branched polycarbonates wherein a polyfunctional aromatic compound is reacted with the dihydric phenol and the carbonate precursor to provide a thermoplastic randomly branched polycarbonate wherein the recurring units of formula I contain branching groups.

The preferred polycarbonate resin is one which may be derived from the reaction of bisphenol-A with phosgene. These preferred polycarbonates have from 10 to about 400 recurring structural units of the general formula

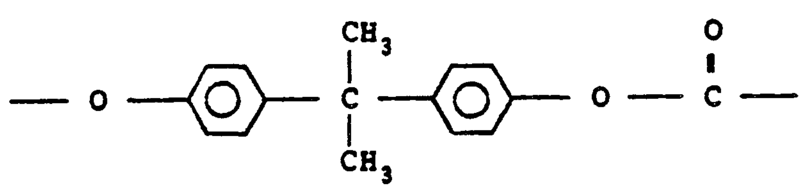

V

The polycarbonate should preferably have an intrinsic viscosity between about 0.3 and about 1.0, more preferably from about 0.4 to about 0.65 as measured at 25° C in methylene chloride.

The present process has been found not only to achieve effective surface impregnation, but also to improve the surface appearance of thermoplastic articles. Minor imperfections, such as scratches and

hazing, are actually reduced or eliminated upon treatment according to this invention. The solvent system and the impregnation conditions have been found to affect the quality of the surface of the treated article. For example, Figure 1 of the drawings is a photomicrograph of a hazy polycarbonate surface which was treated with a 6% solution of a UV absorber in 1-methoxy-2-propanol at 52° C. Figure 2 is a photomicrograph of a polycarbonate surface which has been treated with a 6% solution of a UV absorber in 1-methoxy-2-propanol at 132° C. The surface is marred with minor imperfections known as dewets. Figure 3 is a photomicrograph of a polycarbonate surface which has been treated with the composition of the present invention (5.2% UV absorber, 40.6% propanediol, 27.1% 2-butoxyethanol and 27.1% 4-hydroxy-4-methyl-2-pentanone) at room temperature. The low impregnation temperature resulted in the formation of crystals of the UV absorber on the surface of the polycarbonate. In contrast to the surfaces depicted in Figures 1-3, Figures 4a and 4b illustrate the ameliorating effect of the process of this invention on a scratched polycarbonate surface. Figure 4a is a photomicrograph of an untreated polycarbonate film with scratches. Figure 4b is a photomicrograph of the same film after treatment according to the process of the present invention (5.2% UV absorber, 40.6% propanediol, 47.1% 2-butoxyethanol and 27.1% 4-hydroxy-4-methyl-2-pentanone at 129° C). The process of the present invention actually removed the scratches and produced a high quality, glossy film.

## Description of the Preferred Embodiment

In order to more fully and clearly illustrate the present invention, the following specific examples are presented. It is intended that the examples be considered illustrative rather than limiting the invention disclosed and claimed herein. In the examples, all parts and percentages are on a weight basis unless otherwise specified.

### Example 1

Lexan® polycarbonate test pieces measuring 6" x 8" and 0.187 mils thick were heated in an oven at 149° C for 30 minutes. After removal, the sheets were laid flat on a felt surface and allowed to cool until the desired surface temperature of 93° to 135° C was reached as measured by an infrared thermometer. The sheets were treated this way to simulate the situation on an extrusion line where the core temperature is higher than the surface temperature.

Subsequently the test pieces were hand sprayed with an air spray gun with an air pressure of 12 psig and a spray distance of 7 to 9 inches. The stabilizing composition was at room temperature. The sheet was covered in three passes, with the approximate application of 0.65 grams per test piece. During spraying the temperature of the pieces dropped 8 to 12° C. The test pieces eventually cooled down to room temperature and were dry approximately 1 minute after spraying.

The stabilizing composition contained 6% Cyabsorb® UV-531 UV absorber, 31.3% 1,2-propanediol, 31.3% 2-butoxyethanol, and 31.3% 4-hydroxy-4-methyl-2-pentanone.

In preparing the stabilizing composition the three liquid carriers were mixed first and then the UV radiation absorber was added.

The UV absorbance was measured by taping thin gauge film to the test sheet, submitting it to the above described procedure, and then measuring the absorbance both before and after washing excess radiation absorber off the film with isopropyl alcohol. The optical quality of the resulting polycarbonate article were satisfactory for the purposes of the present invention.

### Example 2

The procedure of Example 1 was substantially repeated except that the stabilizing composition contained 26.9% 1,2-propanediol, 26.9% 2-butoxyethanol, and 40.3% 4-hydroxy-4-methyl-2-pentanone. The optical quality of the resulting was good, although slightly reduced relative to the article in Example 1.

Example 3

The procedure of Example 1 was substantially repeated except that the stabilizing composition contained 5.2% ultraviolet radiation absorber, 40.6% 1,2-propanediol, 27.1% 2-butoxyethanol, and 27.1% 4-hydroxy-4-methyl-2-pentanone. The optical quality of the resulting article is better than either Example 1 or 2. The article had a UV absorbance of 2.9 before and after washing, which indicates that the impregnation of the UV radiation absorber was complete. Also, the spraying of the stabilizing composition into the article eliminated scratches on the film surface and gave a high gloss appearance.

Example 4

The procedure of Example 1 was substantially repeated except that the stabilizing composition contained 3.3% UV radiation absorber, 43.0% 1,2-propanediol, 21.5% 2-butoxyethanol and 32.2% 4-hydroxy-4-methyl-2-pentanone. Only 3.3% of the UV radiation absorber could be dissolved at room temperature. This composition gave acceptable optical quality between 93°C and 135°C sheet surface temperature.

Example 5

The procedure of Example 1 was repeated in all essential details, except that the stabilizing composition contained 6.8% UV radiation absorber, 41.4% 1,2-propanediol, 20.7% 2-butoxyethanol and 31.1% 4-hydroxy-4-methyl-2-pentanone. Unlike in Examples 1-4, in preparing the UV stabilizing composition, the UV radiation absorber was dissolved first in 2-butoxyethanol/4-hydroxy-4-methylpentanone-2 mixture and after complete 1,2 propanediol was added. During mixing, several minutes after adding the 1,2-propanediol the radiation absorber started to crystallize, and virtually all the radiation absorber left the solution. In this instance, the solubility limit of the particular UV absorber was exceeded. Increasing the concentration of 4-hydroxy-4-methyl-2-pentanone or using a more soluble UV absorber would provide a usable impregnating solution.

The foregoing disclosure of this invention is not to be considered as limiting, since many variations may be made by those skilled in the art without departing from the scope or spirit of the foregoing description.

**Claims**

1. A composition for impregnating the surface of a thermoplastic article with an ultraviolet radiation-absorbing compound, which comprises a surface impregnation effective amount of an ultraviolet radiation-absorbing aromatic organic compound dissolved in a solvent which contains from about 20% to about 50% by weight propanediol, from about 20% to about 45% by weight 2-butoxyethanol and from about 20% to about 40% by weight 4-hydroxy-4-methylpentanone

2. The composition of claim 1, wherein the solvent contains from about 25% to about 45% by weight propanediol, from about 20% to about 30% by weight 2-butoxyethanol and from about 25% to about 45% by weight 4-hydroxy-4-methylpentanone.

3. The composition of claim 1, wherein the composition contains from about 0.01 to about 15% by weight of the ultraviolet radiation-absorbing compound.

4. The composition of claim 2, wherein the composition contains from about 0.1 to about 10% by weight of the ultraviolet radiation-absorbing compound.

5. The composition of claim 4, wherein the ultraviolet radiation-absorbing compound is selected from the group consisting of benzophenone, benzophenone derivatives, benzotriazole, benzotriazole derivatives, benzoate esters, phenyl salicylates, crotonic acid derivatives, malonic acid esters and cyanoacrylates.

6. The composition of claim 5, wherein the ultraviolet radiation-absorbing compound is 2-hydroxy-4-octoxybenzophenone.

7. A process of producing an ultraviolet radiation stabilized thermoplastic article, which comprises impregnating the surface of said thermoplastic article with an ultraviolet radiation-absorbing aromatic organic compound by contacting the thermoplastic article, which has been preheated to a surface impregnation effective elevated temperature, with a composition which contains a surface impregnation effective amount of said ultraviolet radiation-absorbing aromatic organic compound dissolved in a solvent which contains from about 20% to about 50% by weight propanediol, from about 20% to about 45% by weight 2-butoxyethanol and from about 20% to about 40% by weight 4-hydroxy-4-methylpentanone.

8. The process of claim 7, wherein the surface impregnation effective elevated temperature ranges from about 40° C to about 200° C.

9. The process of claim 7, wherein the thermoplastic is a polycarbonate, and the surface impregnation effective elevated temperature ranges from about 100° C to about 150° C.

10. The process of claim 9, wherein the solvent contains from about 25% to about 45% by weight propanediol, from about 20% to about 30% by weight 2-butoxyethanol and from about 25% to about 45% by weight 4-hydroxy-4-methylpentanone.

11. The process of claim 9, wherein the compositioncontains from about 0.01 to about 15% by weight of the ultraviolet radiation-absorbing compound.

12. The process of claim 9, wherein the composition contains from about 0.1 to about 10% by weight of the ultraviolet radiation-absorbing compound.

13. The process of claim 12, wherein the ultraviolet radiation-absorbing compound is selected from the group consisting of benzophenone, benzophenone derivatives, benzotriazole, benzotriazole derivatives, benzoate esters, phenyl salicylates, crotonic acid derivatives, malonic acid esters and cyanoacrylates.

14. The process of claim 13, wherein the ultraviolet radiation-absorbing compound is 2-hydroxy-4-octoxybenzophenone.

15. The process of claim 9, wherein the thermoplastic article is contacted with the composition under conditions and for a time sufficient to impart a UV absorbance of about 2 or greater to the thermoplastic article.

16. The process of claim 15, wherein the UV absorbance of the treated thermoplastic article is about 2.5 or greater.

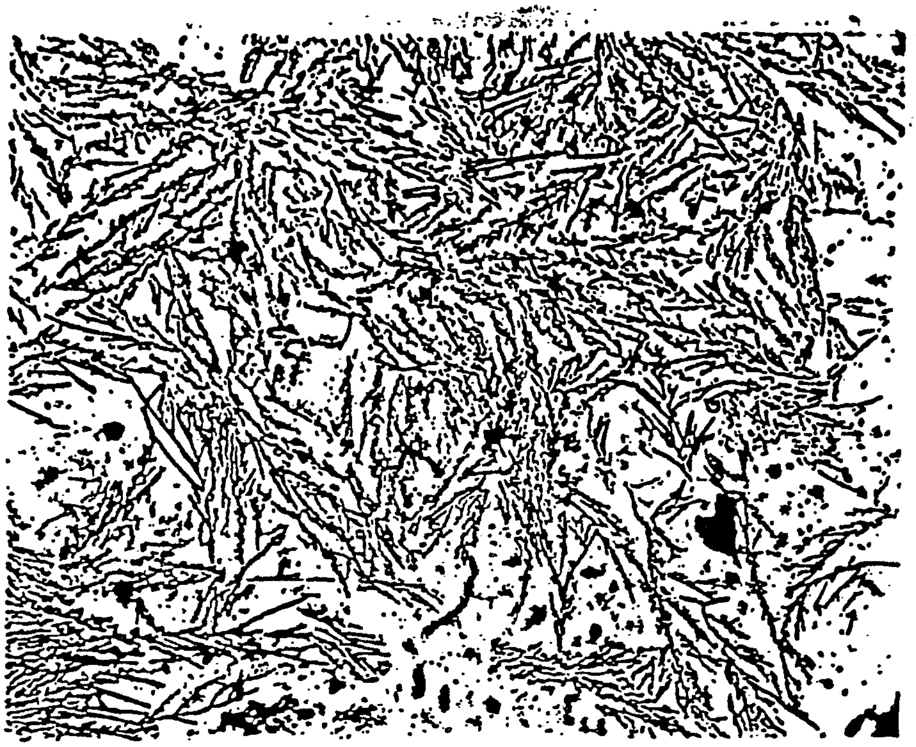

Fig. 1

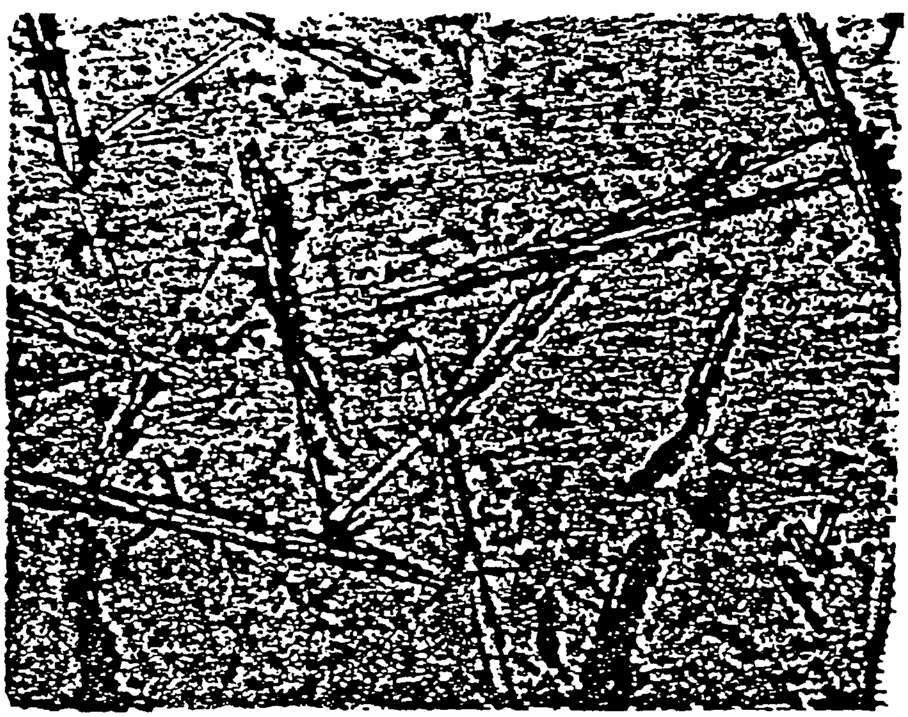

Fig. 3

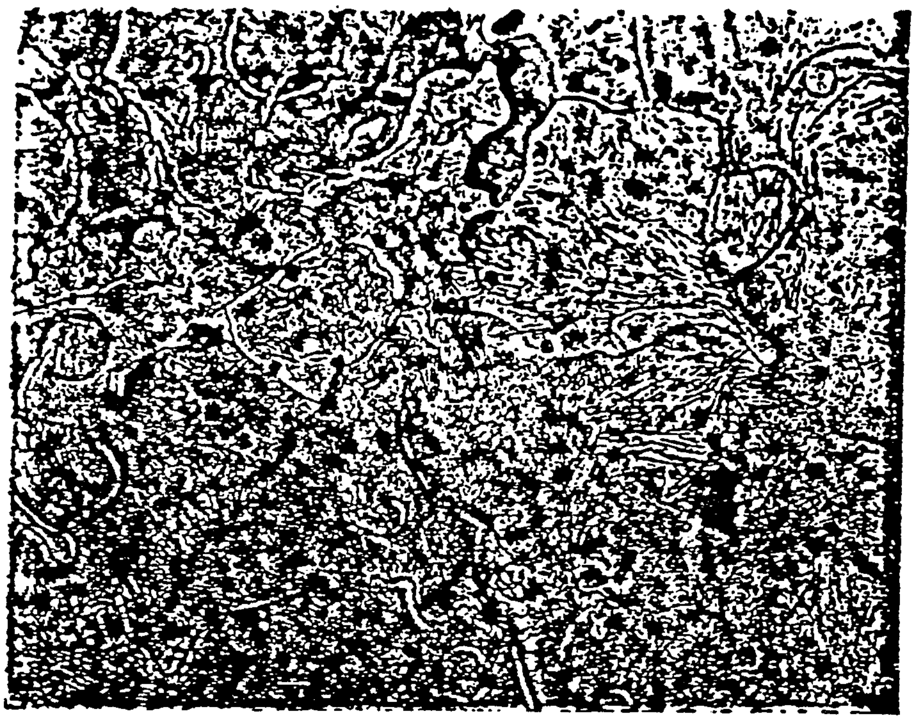

Fig. 2

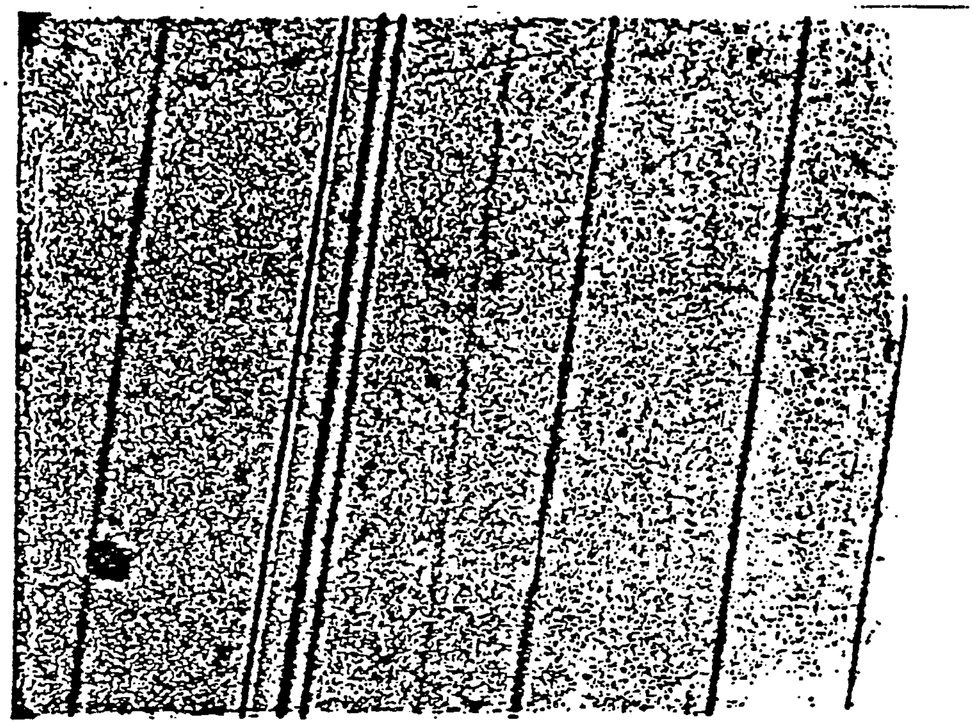

Fig. 4a

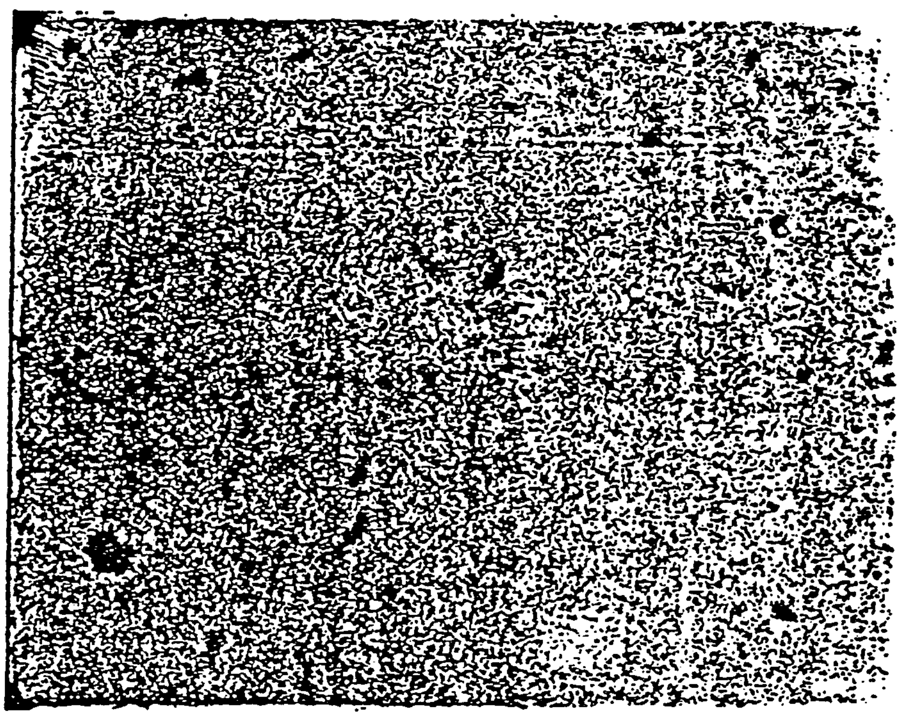

Fig. 4b

European Patent Office

# EUROPEAN SEARCH REPORT

Application Number

EP 88 11 9308

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 009 768 (EASTMAN KODAK CO.)<br>* Whole document *<br>--- | 1,3,5,7 | C 08 J 7/06 |
| A | US-A-3 297 462 (H.H. FANNING)<br>* Claims; examples 1,2 *<br>--- | 1,3,5 | |
| A,D | US-A-4 322 455 (OLSON et al.)<br>* Claims; example 1 *<br>----- | 1,5 | |
| | | | **TECHNICAL FIELDS SEARCHED (Int. Cl.4)** |
| | | | C 08 J<br>C 08 K |

The present search report has been drawn up for all claims

| Place of search | Date of completion of the search | Examiner |
|---|---|---|
| THE HAGUE | 20-01-1989 | BETTELS B.R. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)